(19) **Europäisches Patentamt**

**European Patent Office**

**Office européen des brevets**

(11) Veröffentlichungsnummer : **0 374 902 B1**

---

(12) ## EUROPÄISCHE PATENTSCHRIFT

(45) Veröffentlichungstag der Patentschrift :
**19.04.95 Patentblatt 95/16**

(21) Anmeldenummer : **89123591.3**

(22) Anmeldetag : **20.12.89**

(51) Int. Cl.⁶ : **H04R 1/38,** H04R 1/40

---

(54) **Mikrofonsystem zum Bestimmen der Richtung und Position einer Schallquelle.**

---

(30) Priorität : **21.12.88 DE 3843034**

(43) Veröffentlichungstag der Anmeldung :
**27.06.90 Patentblatt 90/26**

(45) Bekanntmachung des Hinweises auf die
Patenterteilung :
**19.04.95 Patentblatt 95/16**

(84) Benannte Vertragsstaaten :
**ES FR GB IT NL**

(56) Entgegenhaltungen :
**US-A- 2 325 424**
**US-A- 2 515 031**
**US-A- 2 810 786**
**US-A- 4 703 506**

(73) Patentinhaber : **Bschorr, Oskar, Dr. rer. nat.**
**Keplerstrasse 11**
**D-81679 München (DE)**

(72) Erfinder : **Bschorr, Oskar, Dr. rer. nat.**
**Keplerstrasse 11**
**D-81679 München (DE)**

---

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Mikrofonsystem zum Bestimmen der Richtung und der Position einer Schallquelle.

Die überwiegend verwendeten Mikrofone registrieren den Schalldruck eines von einer Schallquelle ausgehenden Schallsignales. Da der Schalldruck eine skalare Größe ist, geht bei diesen "Druck"-Mikrofonen die Richtungsinformation des Schallsignales verloren, die eine Aussage über die Position der Signalquelle ist.

Auf der anderen Seite gibt es sog. Schnellemikrofone, die Informationen hinsichtlich der Geschwindigkeitsamplitude der Energiedichteverteilung bzw. Intensität messen, z.B. in der Ausführung als Bändchen-Mikrofon. Auch dieser Mikrofontyp kann von seiner Bauweise her die Richtungsinformation, die im Schnellevektor enthalten ist, nicht aufnehmen.

Speziell für Intensitätsmessungen und Richtungsmessungen werden Anordnungen aus mehreren Mikrofonen, z.B. Doppelmikrofone verwendet, mit denen der Schalldruck und der zeitliche Druckgradient sowie die Schallschnelle erfaßt werden. Hierbei sind extreme Anforderungen an die Gleichheit der Mikrofone zu erfüllen. Zur Vermessung der Richtungsverteilung eines von einer Schallquelle ausgehenden Schallfeldes ist es dabei erforderlich, mit der Mikrofonachse den gesamten Raumwinkel abzutasten.

Der Erfindung liegt die Aufgabe zugrunde, ein Mikrofonsystem anzugeben, das geeignet ist, den Schalldruckgradienten und die Schallschnelle nach Betrag, Phase und Richtung zu vermessen, so daß die Position von Schallquellen ermittelt werden kann und vektorielle Intensitätsmessungen möglich sind. Dieses Mikrofonsystem soll für die Messung von Schallwellen in gasförmigen, flüssigen und festen Medien geeignet sein und z.B. auch als Hydrofon oder Geofon verwendet werden können.

Diese Aufgabe ist gemäß der Erfindung durch die kennzeichnenden Merkmale des Patentanspruches 1 gelöst.

Demgemäß ist lediglich ein einziges, sog. Gradientenmikrofon mit einem Mikrofonkörper, vorzugsweise einer Kugel, zur Bestimmung der Position und Richtung einer Schallquelle notwendig, wobei der Mikrofonkörper dem zu vermessenden Schallfeld exponiert und die durch das Schallfeld induzierte Schwingbewegung des Mikrofonkörpers mit in diesem eingebauten Schwingungaufnehmern, z.B. Beschleunigungaufnehmern, vermessen wird. Ist der Durchmesser des Mikrofonkörpers, z.B. einer Kugel, klein gegen die Schallwellenlänge, so ist die Schwingungsbeschleunigung ein Maß für den Schalldruckgradienten und kann auf diesen und auch auf die lokale Schallschnelle geeicht werden. Um die Richtung einer Schallquelle zu bestimmen, sind zumindest drei auf die drei Raumrichtungen empfindliche Schwingungsaufnehmer notwendig. Um gleichzeitig n verschiedene Schallquellen zu separieren, sind m nicht-kollinear angebrachte Schwingungsaufnehmer notwendig, wobei m größer als n ist. Der Signalverlauf $q_n(t)$ der n.ten Schallquelle errechnet sich aus den Signalen $S_m(t)$ der Aufnehmer nach der Matrizengleichung $\vec{q}(t) = A^{-1} \vec{s}(t)$ (1)

Die Koeffizientenmatrix dieser Gleichung hat dann die Glieder

$$A_{mn} = \vec{m} \cdot \vec{n} \qquad (2)$$

wobei $\vec{m}$ und $\vec{n}$ die Einheitsvektoren der Richtungen von Schwingungsaufnehmern bzw. Schallquellen sind. Somit kann durch die Auswertung der Bewegungen des elastisch aufgehängten Mikrofonkörpers unmittelbar die Richtung und bei einer Triangulation auch die Position der Schallquelle bestimmt werden. Um Störungen zwischen den Frequenzen des Schallfeldes und der Eigenfrequenzen der elastischen Halterung zu vermeiden, wird die Eigenfrequenz der elastischen Halterung auf einen Wert unterhalb des Meßbereiches des Mikrofons eingestellt.

Gemäß einer bevorzugten Ausführungsform der Erfindung werden in der Oberfläche des Mikrofonkörpers des Gradientenmikrofons ein oder mehrere herkömmliche Schalldruckmikrofone zusätzlich angeordnet. Durch die hiermit mögliche Registrierung des Schalldruckes und der Schallschnelle ist auch die Bestimmung der vektoriellen Schallintensität möglich.

Das Gradientenmikrofon gemäß der Erfindung kann zudem frequenzselektiv ausgelegt werden. Ein natürliches Empfindlichkeitsmaximum besteht bei der Frequenz, deren halbe Wellenlänge dem Durchmesser des Mikrofonkörpers entspricht. In diesem Falle liegen auf der Vorder- und der Rückseite des Mikrofonkörpers gegensinnige Druckverhältnisse vor. Eine zusätzliche Resonanzüberhöhung ergibt sich dann, wenn der Mikrofonkörper über eine Federkopplung mit einer Gegenmasse verbunden ist, die bevorzugt innerhalb des Mikrofonkörpers elastisch aufgehängt ist. Eine solche Anordnung stellt einen einläufigen Schwinger mit einstellbarer Resonanzfrequenz und Eigendämpfung dar. Mit einem solchen System läßt sich z.B. die subjektive Amplitudenbewertung approximieren.

Wenn die Detektierung und Verfolgung von Schallquellen lediglich in einer Ebene verlangt wird, so z.B. das Erfassen und Verfolgen bodengebundener Fahrzeuge, kann anstelle einer Kugel ein zylinderförmiger Mikrofonkörper ausreichend sein. Die Schwingungsaufnehmer sind in diesem Falle über den Zylinderumfang verteilt. Zur Erhöhung der Empfindlichkeit und zur Verringerung des Windgeräusches bei Außenmessungen ist es zweckmäßig, mit einem langgestreckten Mikrofonzylinder eine große Fläche für die Schallbeaufschlagung bereitzustellen.

Bei Außenmessungen ist es zudem vorteilhaft, die Außenfläche des Gradientenmikrofones mit Schaumstoff auszuschlagen, Gitterumschließungen und/oder Folienumschließungen zu versehen, um auf diese Weise die bei Mikrofonaufnahmen bekannten Windgeräusche zu minimieren.

Bei einem Gradientenmikrofon gemäß der Erfindung wird zur Richtungsdetektion die Peilbasis durch die räumliche Distanz der Schwingungsaufnehmer bestimmt. Um diese Peilbasis zu vergrößern, ist es möglich, mehrere derartiger Gradientenmikrofone in einem räumlichen Muster, einem sog. Array anzuordnen, wobei gleichzeitig die einzelnen Mikrofonkörper in ihrer Größe gleich oder unterschiedlich sein können. Hierdurch wird zum einen die Peilbasis und damit die Peilgenauigkeit vergrößert, zum anderen - durch die Staffelung der Mikrofonkörpergrößen - die Frequenzselektivität gesteigert.

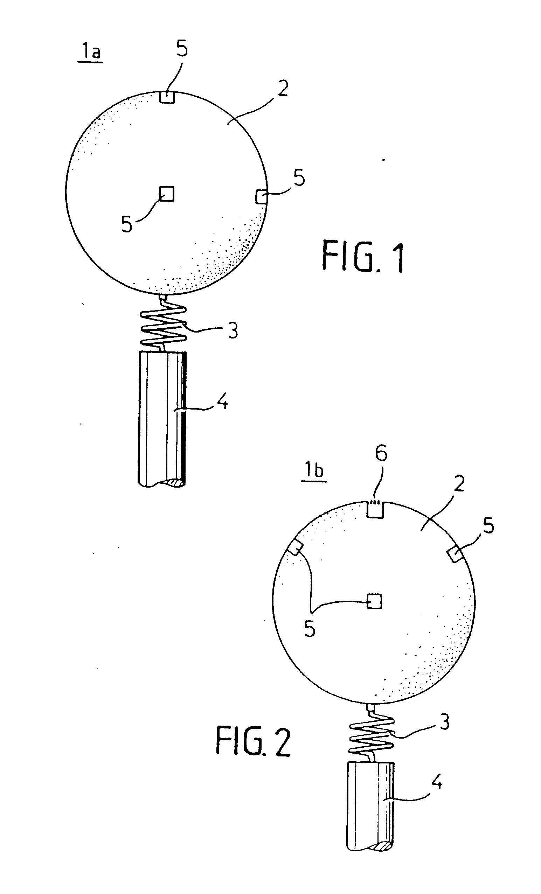

Die Erfindung ist anhand der Figuren 1 bis 6 näher erläutert, die jeweils schematisch ein Ausführungsbeispiel eines Gradientenmikrofones bzw. einer Mikrofonanordnung gemäß der Erfindung zeigen.

In Fig. 1 ist die Grundausführung eines Gradientenmikrofones gemäß der Erfindung dargestellt, mit dem sowohl der Schalldruck als auch die Schallschnelle gemessen werden können. (Deshalb die Bezeichnung Gradientenmikrofon). Das Gradientenmikrofon ist mit 1a gekennzeichnet. Es weist einen Mikrofonkörper 2, in diesem Falle eine Kugel auf, die über eine elastische Halterung 3, z.B. eine oder mehrere Federn, auf einem Mikrofonstativ 4 gelagert ist. Auf der Oberfläche der Kugel 2 sind mehrere Schwingungsaufnehmer 5 angeordnet, z.B. in den drei Raumrichtungen empfindliche Beschleunigungsaufnehmer, Weg- und/oder Geschwindigkeitsmesser etc.. Die Kugelgestalt des Mikrofonkörpers 2 ist hierbei beispielhaft; ebenso können Mikrofonkörper in Form eines Polyeders verwendet werden. Die Abmessungen des Mikrofonkörpers 2 sollten vergleichbar der Wellenlänge der höchsten noch zu registrierenden Frequenz einer zu erfassenden Schallquelle sein. Die internen Eigenfrequenzen des Mikrofonkörpers 2 sollen oberhalb des zu messenden Frequenzbereiches liegen.

Wird der Mikrofonkörper 2 einem Schallfeld ausgesetzt, so erfährt er aufgrund der unterschiedlichen Schalldrücke an seiner Oberfläche eine mechanische Schwingbewegung, die mit Hilfe der räumlich orientierten und fest mit dem Mikrofonkörper 2 verbundenen Schwingungsaufnehmer 5 gemessen wird. Auf diese Weise läßt sich der von einer Schallquelle herrührende, vektorielle Schall druckgradient ermitteln. Sollen mit diesem Gradientenmikrofon 1a mehrere Schallquellen gleichzeitig hinsichtlich Richtung und Position separierbar ermittelt werden, so muß für jede Schallquelle zumindest eine Gruppe aus drei nichtkollinearen Schwingungsaufnehmern vorgesehen werden.

In Fig. 2 ist ein Gradientenmikrofon 1b in der gleichen schematischen Darstellung wie in Fig. 1a gezeigt. Von jenem unterscheidet sich dieses Gradientenmikrofon 1b lediglich dadurch, daß in der Oberfläche des kugeligen Mikrofonkörpers 2 noch ein oder mehrere herkömmliche, auf den Schalldruck ansprechende Mikrofone 6 angeordnet sind. Zusammen mit dem vom Gradientenmikrofon 1a gemäß Fig. 1 gelieferten Gradienten- und Schnellesignal kann mit dem Mikrofon gemäß Fig. 2 darauf die vektorielle Schallintensität eingeeicht und bestimmt werden.

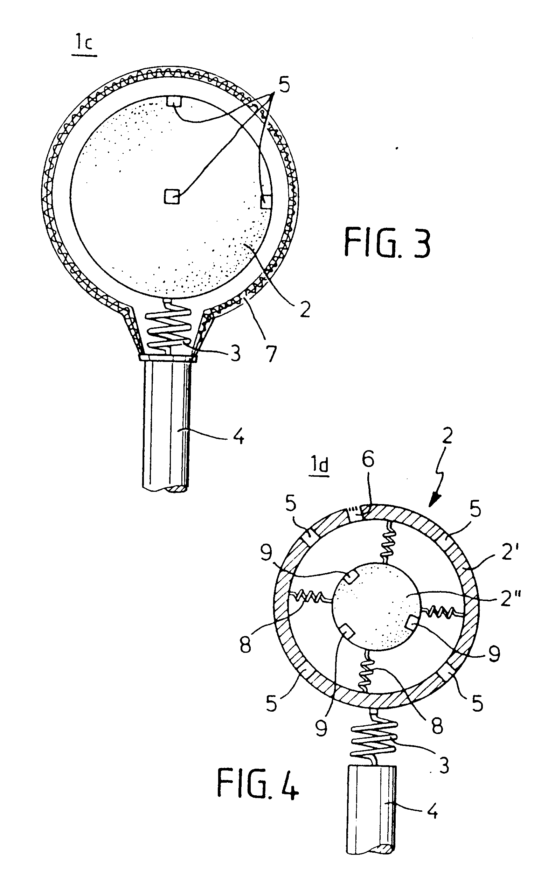

In Fig. 3 ist ein Gradientenmikrofon 1c schematisch dargestellt, das wie das Gradientenmikrofon 1a in Fig. 1 aufgebaut ist. Ein Unterschied besteht letztlich darin, daß der kugelige Mikrofonkörper 2 durch einen schalldurchlässigen Windschirm 7 berührungsfrei umschlossen ist, der seinerseits mit dem Mikrofonstativ 4 verbunden ist. Der Windschirm 7 besteht z.B. aus einem ein- oder mehrlagigen Schaum-, Sieboder Folienmantel.

Das in Fig. 4 schematisch dargestellte Gradientenmikrofon 1d hat einen Mikrofonkörper 2, der aus einem äußeren Mikrofonkörper 2′ und einer innerhalb dieses Mikrofonkörpers angeordneten Gegenmasse 2″ zusammengesetzt ist. Die beiden Massen 2′ und 2″ sind über mehrere Federn 8 miteinander verbunden. In dem äußeren Mikrofonkörper 2′ sind, wie bei den oben beschriebenen Mikrofonen, Schwingungsaufnehmer 5 und Schalldruckmikrofone 6 integriert. Der äußere Mikrofonkörper 2′ ist wiederum über elastische Halterungen 3 mit dem Mikrofonstativ 4 verbunden. Dieses System stellt ein Resonanzsystem dar, das durch entsprechende Abstimmung der Federkonstanten der elastischen Hal terungen in allen drei Raumrichtungen dieselbe Resonanzfrequenz aufweist. Ein solches System wird von einem äußeren Schallfeld bevorzugt bei seiner Resonanzfrequenz angeregt. Auf diese Weise läßt sich ein gewünschter Frequenzgang, so z.B. die dem menschlichen Ohr angenäherte Bewertung der Frequenz einstellen. Mit zusätzlichen Schwingungsaufnehmern 9, die in der Gegenmasse 2″ integriert sind, lassen sich über Antiresonanzerscheinungen spektrale Ausblendungen realisieren.

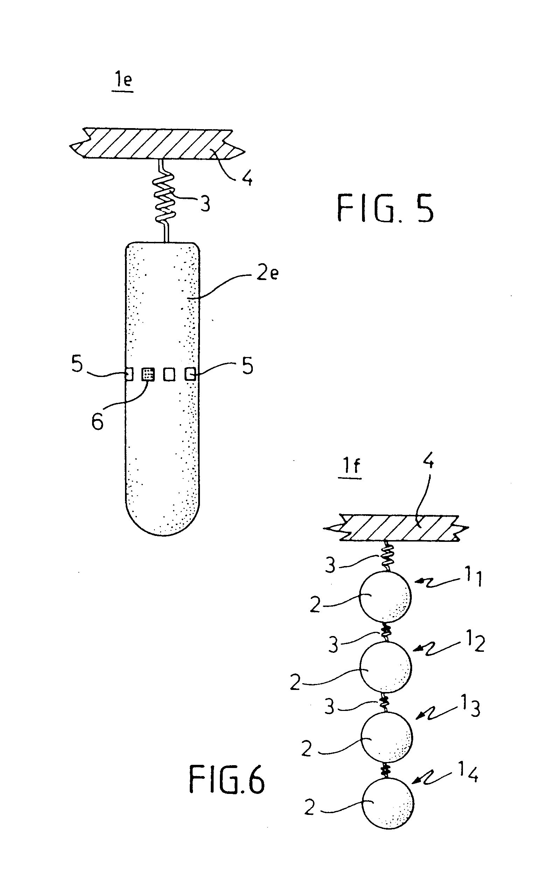

Sollen die Position und die Richtung von Schallquellen lediglich in zwei Dimensionen ermittelt und registriert werden, so kann eine vereinfachte Form eines in Fig. 5 dargestellten Gradientenmikrofones 1e verwendet werden. Der Mikrofonkörper besteht hierbei aus einem Zylinderstück 1e, das wiederum über eine elastische Halterung 3 mit dem Mikrofongehäuse 4 verbunden ist. Am Umfang des Zylinderstückes 2e sind Schwingungsaufnehmer 5 und ggf. Schalldruckmikrofone 6 vorgesehen. Durch Vergrößern der axialen Länge des Zylinderstückes kann der Störabstand zum Windgeräusch vergrößert werden.

In Fig. 6 ist eine Gradientenmikrofonanordnung 1f aus mehreren Gradientenmikrofonen $1_1$, $1_2$, $1_3$ und $1_4$ dargestellt, die entlang einer Linie angeordnet sind. Jedes Gradientenmikrofon weist hierbei einen Mikrofonkörper 2 auf, der entsprechend den obigen Erläuterungen mit Schwingungsaufnehmern und ggf. Schalldruckmikrofonen ausgerüstet ist. Die einzelnen Mikrofonkörper 2 sind jeweils über elastische Halterungen 3 mit einem Mikrofonstativ 4 verbunden, wobei für jedes Gradientenmikrofon ein separates Gehäuse vorgesehen sein kann. Möglich ist es jedoch auch, wie in Fig. 6 dargestellt, daß die Mikrofonkorper der einzelnen Gradientenmikrofone jeweils untereinander und lediglich die beiden äußeren Mikrofonkörper durch elastische Halterungen 3 mit einem gemeinsamen Mikrofonstativ 4 verbunden sind. Durch diese Anordnung in einem Array wird die Peilbasis der Mikrofonanordnung 1f vergrößert. Durch unterschiedliche Durchmesser der Mikrofönkorper 2 kann zusätzlich ein größerer Frequenzbereich umfaßt werden.

## Patentansprüche

1.  Mikrofonsystem zum Bestimmen der Richtung und der Position einer Schallquelle, <u>gekennzeichnet</u> durch mindestens ein Gradientenmikrofon (1a bis 1e) mit einer dem Schallfeld ausgesetzten Masse (2) als Mikrofonkörper, der in einem Mikrofonstativ (4) mittels einer Halterung (3) elastisch aufgehängt ist, deren Eigenfrequenz unterhalb des Meßbereiches des Mikrofons liegt, wobei mit dem Mikrofonkörper (2) zumindest drei richtungsselektive Schwingungsaufnehmer (5) zur Detektion der Schwingungsbewegungen des Mikrofonkörpers fest verbunden sind.

2.  Mikrofonsystem nach Anspruch 1, <u>dadurch gekennzeichnet</u>, daß mit dem Mikrofonkörper (2) des Gradientenmikrofons (1b bis 1e) zusätzlich zumindest ein auf den Schalldruck ansprechendes, herkömmliches Mikrofon (6) fest verbunden ist.

3.  Mikrofonsystem nach einem der Ansprüche 1 bis 2, <u>dadurch gekennzeichnet</u>, daß der Mikrofonkörper (2) des Gradientenmikrofons eine Kugel ist.

4.  Mikrofonsystem nach einem der Ansprüche 1 bis 2, <u>dadurch gekennzeichnet</u>, daß der Mikrofonkörper des Gradientenmikrofons ein Zylinder (2e) ist, an dessen Umfang die Schwingungsaufnehmer (5) angeordnet sind.

5.  Mikrofonsystem nach einem der vorhergehenden Ansprüche, <u>dadurch gekennzeichnet</u>, daß innerhalb des Mikrofonkörpers (2') des Gradientenmikrofons eine mit diesem über Halterungen (8) elastisch verbundene Gegenmasse (2'') gelegen ist, wobei die Anordnung aus äußerem Mikrofonkörper (2') und Gegenmasse (2'') vorzugsweise in allen Raumrichtungen die gleiche Resonanzfrequenz aufweist.

6.  Mikrofonsystem nach Anspruch 5, <u>dadurch gekennzeichnet</u>, daß mit der Gegenmasse (2'') Schwingungsaufnehmer (9) fest verbunden sind.

7.  Mikrofonsystem nach einem der vorhergehenden Ansprüche, <u>dadurch gekennzeichnet</u>, daß der Mikrofonkörper (2) des Gradientenmikrofons (1c) berührungsfrei von einem Windschirm (7) umgeben ist.

8.  Mikrofonsystem nach einem der vorhergehenden Ansprüche, <u>dadurch gekennzeichnet</u>, daß zur Erhöhung der Peilbasis und der Peilgenauigkeit mehrere signalmäßig miteinander verbundene Gradientenmikrofone ($1_1$ bis $1_4$) in einem räumlichen Muster bezw. Array angeordnet sind.

## Claims

1.  Microfon system estimating the direction and position of a noise source, determined by a gradient microfon ( 1 a - 1 e ) with a mass as microfon device ( 2 ) exposed to a noise field, mounted elastically by a holder ( 3 ) in a microfon stand ( 4 ) having a resonance frequency less the frequency range of the microfon, with more than three direction sensitive vibration pick ups ( 5 ) fixed on the microfon device ( 2 ) to detect the vibration of the microfon device ( 2 ).

2.  Microfon system according to claim 1, determined by a microfon device ( 2 ) of the gradient microfons ( 1 b - 1 e ) additionally connected with a conventional, sound pressure sensitive microfon ( 6 ).

3.  Microfon system according to the claims 1 and 2, determined by a microfon device ( 2 ) of the gradient microfon being a sphere.

4.  Microfon system according to the claims 1 and 2, determined by a microfon device ( 2 ) of the gradient microfon being a cylinder, with vibration pick ups fixed at the circumference.

5.  Microfon system according to one of the above claims, determined that inside the microfon device ( 2' ) of the gradient microfon exists a counter mass ( 2'' ) elastically fixed by a holder ( 8 ) and that the system of microfon device ( 2' ) and counter mass ( 2'' ) having preferable, in all directions the same resonance frequency.

6. Microfon system according to claim 5, determined that the counter mass ( 2″ ) is connected with vibration pick ups ( 9 ).

7. Microfon system according to one of the above claims, determined that the microfon device ( 2 ) of the gradient microfon ( 1 d ) is contactless surrounded by a wind screen ( 7 ).

8. Microfon system according to one of the above claims, determined that increasing the direction finding accuracy that the signals of several gradient microfons ( $1_1$ - $1_4$ ) arranged in a three dimensional pattern or in an array are combined.

**Revendications**

1. Le système à microphone pour déterminer la direction ainsi que la position d'une source de son est caractérisé par un unique microphone à gradient (1a jusqu'à 1e). Il est constitué d'une masse (2) sous un champ de son, représentant le corps du microphone sur lequel il est accroché (de manière élastique) par une fixation (3) à un pied (4). La résonance propre engendrée par la fixation se situe hors de la bande de fréquence de mesure du microphone. Le corps du microphone (2) est relié d'une manière fixe à trois capteurs de vibrations (5) (suivant trois directions) pour la détection d'oscillations du corps du microphone (2).

2. Le système à microphone suivant 1. est de ce fait caractérisé par le corps du microphone (2) du microphone à gradient (1b jusqu'à 1e). Le corps du microphone est également fixé à un microphone traditionnel à pression.

3. Le système à microphone suivant 1. et 2. est caractérisé par le corps du microphone (2) du microphone à gradient qui est en forme de boule.

4. Le système à microphone suivant 1. et 2. est caractérisé par le corps du microphone (2) du microphone à gradient qui est en forme de cylindre (2e) sur laquel sont posés ( à la surface du cylindre) d'une facon ordonnée les capteurs de vibrations.

5. Le système à microphone suivant les caractéristiques précédentes a la propriété suivante : l'intérieur du corps du microphone (2′) du microphone à gradient est relié suivant la fixation (8) d'une manière élastique à un contre poids (2″). Ce contre poids et le corps du microphone sont disposés de facon tel, qu'à chaque direction de l'espace s'établie la même fréquence de résonance.

6. Le système à microphone suivant 5. est caractériser par le contre poids (2″) qui est fixé au capteurs de vibration (9).

7. Le système à microphone suivant la caractéristique précédente est caractérisé par le corps du microphone (2) du microphone à gradient (1d) qui sans contact direct est enroulé à un protecteur de vent (7).

8. Le système à microphone suivant les caractéristiques précédentes est caractérisé par plusieurs microphones à gradient ($1_1$ jusqu'à $1_4$) qui sont ordonnés à des signaux dans un modèle d'espace voire un array afin d'améliorer la précision de la mise en place des microphones.

FIG. 1

FIG. 2

FIG. 3

FIG. 4

7

FIG. 5

FIG.6